# EUROPEAN PATENT SPECIFICATION

(11) **EP 0 242 624 B1**
(45) Date of publication and mention of the grant of the patent: **08.09.1993**
(21) Application number: 87104425.1
(22) Date of filing: 25.03.1987
(51) Int. Cl.: G07F 7/10

(54) **Automatic transaction machine**
Automatische Überweisungsvorrichtung
Machine automatique à transactions

(30) Priority: 25.03.1986 JP 67677/86
(43) Date of publication of application: 28.10.1987
(73) Proprietor: OMRON TATEISI ELECTRONICS CO., Kyoto 616 (JP)
(72) Inventor: Sugahara, Youji Omron Tateisi Electronics Co., Nagaokakyo-City Kyoto 617 (JP); Matsumura, Hideyuki Omron Tateisi Electronics Co., Nagaokakyo-City Kyoto 617 (JP)
(74) Representative: WILHELMS, KILIAN & PARTNER Patentanwälte

(56) References cited:
- US-A- 3 982 103
- US-A- 4 011 433
- US-A- 4 091 448
- US-A- 4 197 986

## Description

The present invention relates to an automatic transaction machine which performs bank deposit and withdrawal functions without the aid, of a clerk and, more particularly, to an automatic transaction machine which executes transactions on an off-line basis when there is a communications interruption between the machine and a central station.

Automatic transaction machines inclusive of automatic deposit-withdrawal machines installed in banks and similar institutions (hereinafter referred to briefly as an ATM) are connected to their respective processing centers, containing usually a host computer, via communication lines. The center (also termed central station) carries a deposit account file where the deposit account of each customer is registered and each terminal machine transmits transaction data to this center and after the data in this deposit account file has been updated according to the data, executes a transaction with the customer. In this manner, the automatic transaction machine is connected on-line to the center so that the updating of a deposit account file and the requested transaction can be carried out on a real time basis. However, when communication trouble occurs during the course of a transaction and the automatic transaction machine cannot have access to the center, the machine is brought into a "down" condition and has to discontinue the transaction with the customer. Moreover, since such a "down" condition may occur, either before or after updating of the deposit account file at the center, a clerk must rush to the terminal machine to send an inquiry to the center to determine the stage at which the transaction was discontinued and, depending on the stage, must judge whether the transaction is to be cancelled or is to be manually continued to completion. Thus, the provision of a clerk has been an essential requisite. Since the machine may be brought into a "down" condition by communications line trouble, despite the fact that the machine itself is functioning properly, and because a clerk is required for recovery, the machine cannot be exploited to full advantage at an automated banking premises, or on holidays.

An automatic transaction machine according to the preamble of claim 1 results from US-A-4 114 027.

The present invention has as its object to provide an automatic transaction machine which, even in the event of communications line trouble, may execute a transaction off-line and, also, perform updating of the center file with the off-line transaction data, when the communications line is restored, all automatically.

The present invention achieves the foregoing object by an automatic transaction machine as defined in claim 1.

The machine comprises a means for inquiring, upon recovery of communications with the center, if a deposit account file has been updated by the transaction data stored in the off-line transaction memory means, and a means for transmitting the transaction data to the center when the deposit account file has not been updated.

The present invention thus has the following advantages. Even in the event that the machine cannot communicate with the center due to communications line trouble, it may consummate the requested transaction on an off-line basis. In addition, although communications line trouble in the course of a transaction may occur either before or after the updating of the deposit account file at the center, an inquiry is made to the center upon recovery of the communications line and the transaction data stored in the off-line transaction memory means is transmitted to the center only when the file has not been updated as yet, with the result that double updating and the failure to update the deposit account file is eliminated.

In this manner, the machine is not brought into a "down" condition by an interruption in communications with the center and, upon recovery of communications, the deposit account file at the center is checked and automatically updated if necessary, so that the reliability of the system, without requiring a clerk at an automatic banking premises or on holidays, is increased.

The above and other objects, features and advantages of the invention will be more readily apparent from the following detailed description of the invention which is provided in connection with the accompanying drawings in which;
Fig. 1 is a flow chart showing the operation of an ATM embodying the principle of the invention;
Fig. 2 is an exterior view of the same ATM;
Fig. 3 is a block diagram of the control segment of the same ATM;
Fig. 4 (A) is a partial elementary diagram of a storage area at the main control unit RAM of the above ATM; and
Fig. 4 (B) is a partial elementary diagram of a storage area of the floppy disk mounted in the same ATM.

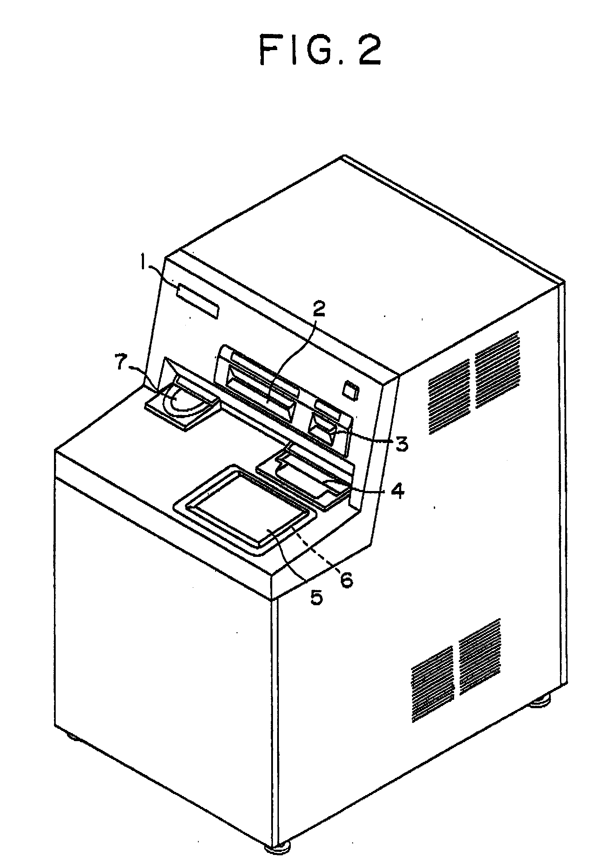

Fig. 2 is an exterior view showing an ATM embodying the principle of the invention. Disposed on an upright panel of a customer-operated face of this ATM are an operation display 1 for indicating whether the machine is occupied or not, a bankbook slot 2 adapted to receive and take in a bankbook, and a card slot 3 for accepting a cash card. Disposed on the table panel of the same customer-operated face are a banknote slot 4 adapted to receive and dispense banknotes, a CRT 5, and a coin slot 7. Mounted on the surface of CRT 5 is a touch switch panel 6 which senses the touch of a finger or the like and the position of the touch. At each stage of a transaction, at least one of type-of-transaction select keys and a ten-key key pattern are displayed on the CRT 5 and the customer's depression of such keys is detected by the touch switch panel 6.

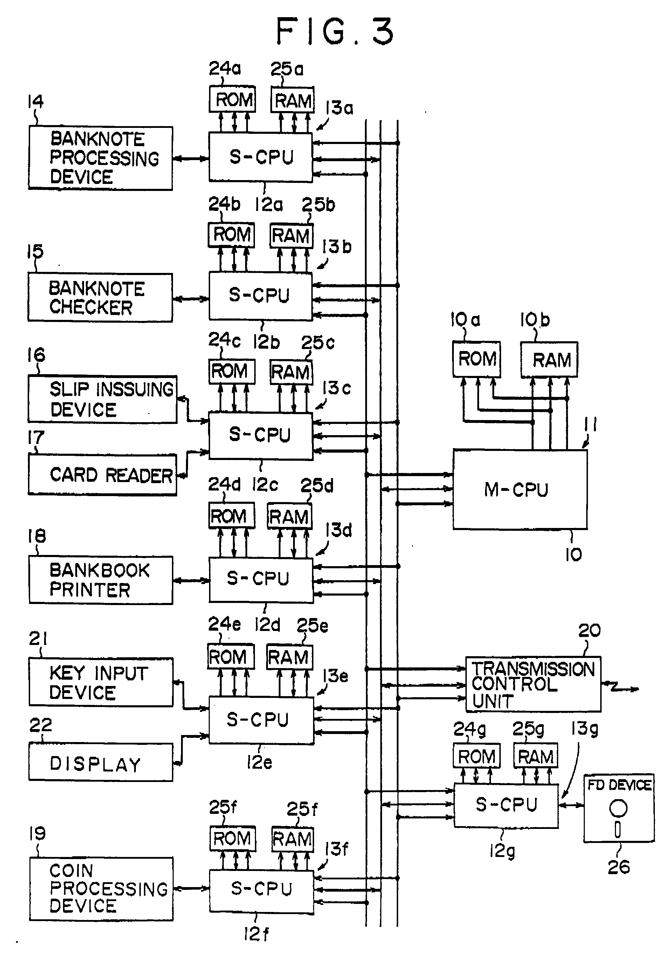

Fig. 3 is a block diagram of the control segment of the ATM. This control segment is based on a master-slave system. A main control unit 11 is provided which consists of a master CPU (M-CPU) 10, a ROM 10a which stores a control program and a RAM 10b. Auxiliary control units 13a through 13g connected to input and output devices via internal bus lines are connected to the main control unit 11. The auxiliary control units 13a through 13g respectively consist of slave CPU's (S-CPU) 12a through 12g, ROM's 24a through 24g which store the operational programs of respective S-CPU's, and RAM's 25a through 25g which store the various input and output data for each of the S-CPU's. Connected to the auxiliary control unit 13a is a banknote processing device 14 for counting the banknotes to be paid out and distributing them to the banknote slot 4. The auxiliary control unit 13b is connected to a banknote checker 15 and adapted to find non-genuine banknotes which may be deposited into the banknote slot 4. The auxiliary control unit 13c is connected to a slip issuing device 16 for issuing an itemized transaction statement, and a card reader 17. Connected to the auxiliary control unit 13d is a bank book printer 18. The auxiliary control unit 13e is connected to a key-input device 21 including the touch switch panel 6 and a display device 22 including CRT 5. The auxiliary control unit 13f is connected to a coin processing device 19 which controls the reception and dispensing of coins at the coin slot 7. Connected to the auxiliary control unit 13g is a floppy disk device 26 in which an off-line transaction memory area (to be described hereinafter) is established to store the relevant transaction data in the event that the transaction is consummated off-line. Further, the internal buses are connected to a transmission control unit 20 which communicates with a central station via a communications line, e.g., a dedicated line.

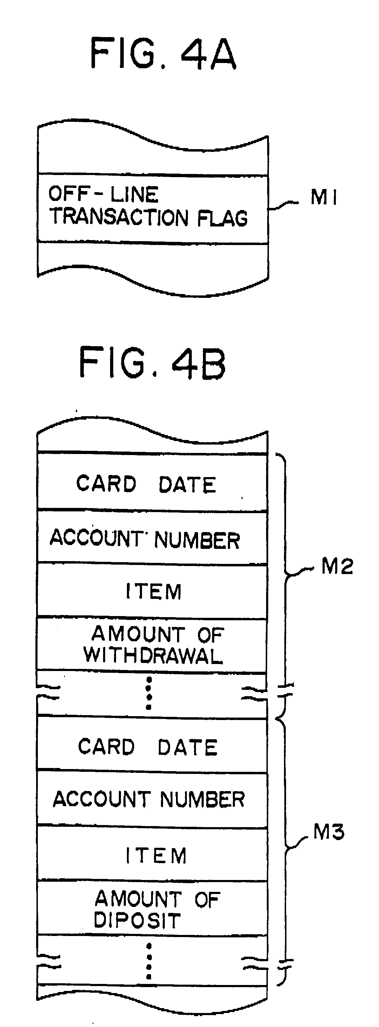

Fig. 4 (A) is a partial elementary diagram illustrating the above-mentioned RAM 10b. Area M1 (Area Mi will hereinafter be referred to briefly as Mi) is an off-line transaction flag storage area. In the event the communication with the center is interrupted by communications line trouble, the ATM of the invention performs the transaction off-line and the off-line transaction flag is a flag for storing an indication that such an off-line transaction has been made. This flag is reset when the deposit account file at the center has been updated with the off-line transaction data or upon confirmation that the file has already been updated.

Fig. 4 (B) is a partial elementary diagram of the floppy disk which is in the floppy-disk device 26, showing an off-line transaction memory area. This off-line transaction memory area consists of a withdrawal memory area (M2) and a deposit memory area (M3), each being adapted to store the card data, deposit account number, item, the amount of withdrawal or deposit, and other data. These data are identical with the data used to compose the message to be sent to the center for normal on-line transaction processing. When trouble occurs in the communications line connection to the central station and the transaction is consummated off-line, the relevant transaction data is stored in this area in lieu of a message to be set to the center, and upon recovery of the communications line connection to the center, an inquiry is made to the center whether the transaction data has already been entered into the deposit account file (whether the deposit account file has been updated) and, if not, the data is sent to the center. This inquiry is made to preclude the chance of double updating, for it may happen that the data on the transaction during the processing, of which a communications line trouble has occurred, has already been sent to the center. A plurality of such areas have been established in order to memorize the data on a plurality of transactions. Upon recovery of the communications line, the data stored in this area is transmitted to the center and, then, cleared.

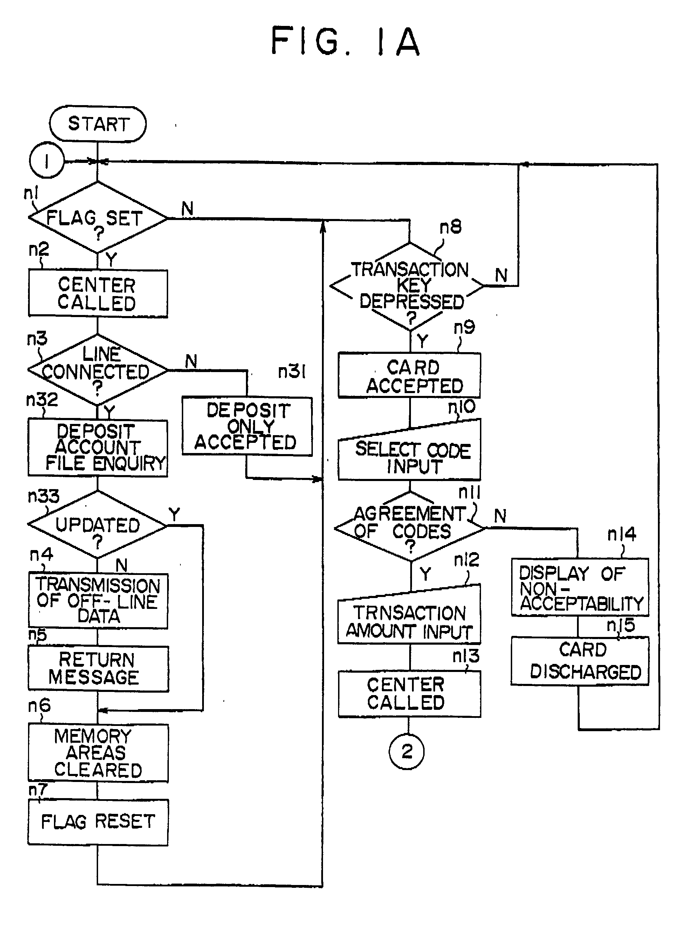

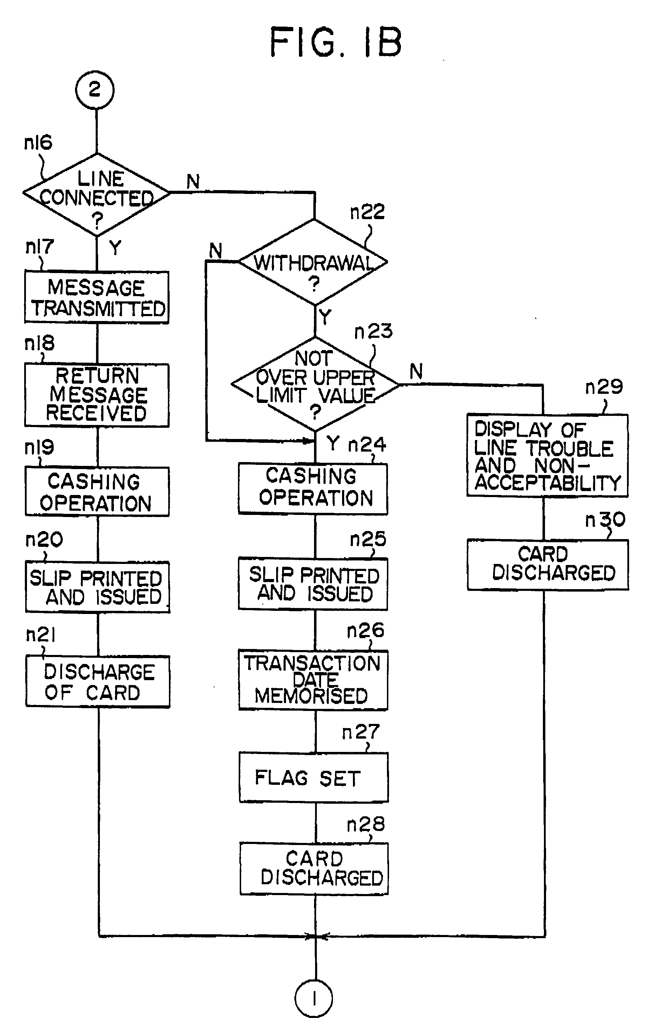

Fig. 1 is a flow chart showing the operation of the above ATM. In step n1 (step ni will hereinafter be referred to briefly as ni), it is judged whether the off-line transaction flag (M1) has been set. If the flag has been set, it is assumed that the off-line transaction data has been stored in the off-line transaction area (M2, M3) and the center is called for transmission of the data (n2). If the communications line to the center is connected upon this call (n3), an inquiry (n32) is made to the center concerning whether the deposit account file has already been updated with the transaction data stored in the off-line transaction memory area (M2, M3). If the center responds with a signal indicating that updating has not yet occurred it is determined in n33 that the updating remains yet to be done, and the sequence proceeds to n4, where the off-line transaction data is transmitted to the center (n4). If a return message informing the ATM of the completion of updating is received from the center (n5), the off-line transaction memory area (M2, M3) is cleared and the off-line transaction flag (M1) is reset (n7). Then, the sequence returns to the idle routine composed of n1 through n8. When the deposit account file has already been updated with the transaction data stored in the off-line transaction memory area (M2, M3), the sequence proceeds from n33 directly to n6.

On the other hand, in the event that the above-mentioned communications line connection to the center cannot be obtained in n3, the mode for selective acceptance of a deposit transaction is selected (n31) and the sequence returns to the above-mentioned idle routine.

In n8, it is judged whether any one of the transactions displayed on CRT 5 has been selected by key depression. In the absence of a key depression, the sequence returns to n1 for repetition of the idle routine. If a transaction key has been depressed, the sequence proceeds to the n9 and the machine accepts the card inserted into the card slot 3. After insertion of the card, the ten-key is displayed on the CRT 5 for acceptance of a secret code input (n10). The inputted secret code is compared with the secret code information on the inserted card and if an agreement is found in n11, the sequence proceeds to n12. In the case of non-agreement, the sequence proceeds to n14, where the non-acceptability of the proposed transaction is indicated on the CRT 5, the card is returned (n15), and the idle routine resumes.

In n12, the transaction amount input from the ten-key on the CRT 5 is accepted (n12) and the transmission control unit 20 is driven to call the center (n13). If this call results in connection of the communications line to the center (n18), the sequence proceeds to n17. In n17, a message containing the transaction data is transmitted to the center. If, in response to this message, a return message informing of the completion of file updating is received from the center (n18), the machine performs a cashing operation such as the release or acceptance of cash (n19), prints and delivers a transaction slip (n20) and discharges the card (n21), followed by a return to the above-mentioned idle routine.

On the other hand, in the event that the communications line connection cannot be obtained in n16, or when the communications line connection fails during the course of the communication, it is inquired in n22 whether the particular transaction is a withdrawal or not. If it is found to be a withdrawal transaction, it is inquired whether the amount of withdrawal so requested is below an allowable upper limit (this upper limit value has been previously set by a clerk) (n23). If the requested amount exceeds this upper limit value, the non-acceptability of the requested transaction is indicated (n29) and the card is discharged back (n30), followed by a return to the idle routine.

In the event that the requested amount of a withdrawal does not exceed the upper limit value, or in the case of a deposit transaction, the sequence proceeds to n24 and, without connection of the communications line to the center, the particular withdrawal or deposit transaction is consummated (n24). The slip form is printed with an indication to the effect that this is an off-line transaction and issued out (n25), the transaction data is memorized in the above-mentioned off-line transaction data memory areas (n26), the off-line transaction flag is set (n27), and the card is discharged (n28). The sequence then returns to the above-mentioned idle routine.

The steps n24 and n25 correspond to the off-line transaction means according to the present invention, and the above-mentioned off-line transaction memory area (M2, M3) and step n26 corresponds to the off-line transaction memory means according to the present invention. Further, n32 corresponds to the means for inquiring whether the deposit account file has been updated or not and n4 corresponds to the means for transmitting the transaction data to the center.

Thus, with this ATM, even when communications between the machine and the center are interrupted by communications line trouble, the transaction can be consummated off-line so that the machine down time can be minimized. Furthermore, when an off-line transaction has been carried out, an inquiry is made to the center whether the deposit account file has been updated or not and the off-line transaction data is transmitted to the center only when the updating of the file remains yet to be done, with the result that the risk of double updating of the deposit account file based on the same transaction data can be eliminated. Moreover, the center is called during the idle routine and if the communicaton line connection has not recovered as yet, only a deposit transaction is accepted, thus eliminating the risk of continuing the off-line withdrawal transaction.

## Claims

1. An automatic transaction machine for executing customer transactions and communicating with a central station, said machine comprising:
means for receiving identifying data identifying a customer;
means for receiving a transaction amount;
means for receiving information concerning a desired transaction;
means (20) for initiating an on-line transaction communication with said central station over a communications link;
means responsive to establishment of said on-line transaction communication with said central station for transmitting data including at least said identifying data and transaction amount over said communications link to said central station for updating an account file corresponding to said identification data thereat;
means responsive to a first signal received from said central station indicating an updating of said account file for completing said desired transaction on-line;
means responsive to an absence of an on-line communication with said central station, after said on-line communication is initiated, for completing said desired transaction off-line; and
an off-line transaction memory means (M2,M3) operative when said machine completes said desired transaction off-line for storing data concerning a completed off-line transaction for later transmission to said central station, characterized by
means operative upon establishment of communications with said central station for enquiring of said central station if said account file has been updated by transaction data stored in said off-line transaction memory means; and
means responsive to a second signal from said central station indicating that said account file has not been updated for transmitting said transaction data from said off-line transaction memory means to said central station.

2. An automatic transaction machine as in claim 1, wherein said means for completing said desired transaction off-line sets said machine in an off-line mode.

3. An automatic transaction machine as in claim 1, further comprising means responsive to receipt of a third signal from said central station indicating the updating of said account file, after said transaction data is transmitted thereto, for clearing said transaction data from said off-line transaction memory means.

4. An automatic transaction machine as in claim 3, further comprising means responsive to receipt of one of said second and third signals indicating the updating of said account file for setting said machine in an on-line mode.

5. An automatic transaction machine as in claim 1, wherein said means for completing said desired transaction off-line further comprises:
means for determining whether a desired transaction is a deposit or withdrawal;
means responsive to a determination that the desired transaction is a withdrawal for determining if the transaction amount is below an allowable upper limit; and
means for permitting completion of said desired transaction if said transaction is a withdrawal and the transaction amount is below said allowable upper limit; or if said transaction is a deposit.

6. An automatic transaction machine as in claim 1, wherein said means for completing said transaction off-line includes means for issuing a printed record of said off-line transaction which contains an indication that said transaction was completed off-line.

7. An automatic transaction machine as in claim 2, further comprising means operative when said machine is in said off-line mode for attempting to establish communications with said central station and in response to a failure to establish said communications for further operating said machine off-line to execute only deposit transactions.

## Patentansprüche

1. Transaktionsautomat zum Durchführen von Kundentransaktionen und Kommunizieren mit einer Zentralstation, wobei der Automat
Mittel zum Empfangen von einen Kunden identifizierenden Identifikationsdaten,
Mittel zum Empfangen einer Transaktionssumme,
Mittel zum Empfangen von eine gewünschte Transaktion entsprechender Information,
Mittel (20) zum Initiieren einer Online-Transaktionskommunikation mit der Zentralstation über eine Kommunikationsverbindung,
auf die Herstellung der Online-Transaktionskommunikation mit der Zentralstation ansprechende Mittel zum Übertragen von Daten, die wenigstens die Identifikationsdaten und Transaktionssumme enthalten, über die Kommunikationsverbindung an die Zentralstation zur Aktualisierung einer den Identifikationsdaten entsprechenden Kontodatei dort,
Mittel, die auf ein von der Zentralstation erhaltenes erstes Signal, welches eine Aktualisierung der Kontodatei angibt, zum Abschließen der gewünschten Transaktion online,
Mittel, die auf ein Fehlen einer Online-Kommunikation mit der Zentralstation nach Initiierung der Online-Kommunikation ansprechen, zum Abschließen der gewünschten Transaktion offline, und
Offline-Transaktionsspeichermittel (M2, M3), die arbeiten, wenn der Automat die gewünschte Transaktion offline abschließt, zur Speicherung von Daten, die eine abgeschlossene Offline-Transaktion betreffen, zur späteren Übertragung auf die Zentralstation aufweist, gekennzeichnet durch
Mittel, die mit Herstellung von Kommunikationen mit der Zentralstation arbeiten, zur Abfrage an der Zentralstation, ob die Kontodatei mit in den Offline-Transaktionsspeichermitteln gespeicherten Transaktionsdaten aktualisiert worden ist, und
Mittel, die auf ein zweites Signal von der Zentralstation ansprechen, das anzeigt, daß die Kontodatei nicht aktualisiert worden ist, zum Übertragen der Transaktionsdaten aus den Offline-Transaktionsspeichermitteln auf die Zentralstation.

2. Transaktionsautomat nach Anspruch 1, bei welchem die Mittel zum Abschließen der gewünschten Transaktion offline den Automaten in eine Offline-Betriebsart setzten.

3. Transaktionsautomat nach Anspruch 1, welcher ferner Mittel, die auf den Empfang eines dritten Signals von der Zentralstation, das die Aktualisierung der Kontodatei anzeigt, nach Übertragung der Transaktionsdaten auf diese ansprechen, zum Löschen der Transaktionsdaten in den Offline-Transaktionsspeichermitteln aufweist.

4. Transaktionsautomat nach Anspruch 3, welcher ferner Mittel, die auf den Empfang eines von zweitem und drittem Signal, angebend die Aktualisierung der Kontodatei, ansprechen, zum Setzen des Automaten in eine Online-Betriebsweise aufweist.

5. Transaktionsautomat nach Anspruch 1, bei welchem die Mittel zum Abschließen der gewünschten Transaktion offline ferner
Mittel zum Bestimmen, ob eine gewünschte Transaktion eine Einlage oder eine Entnahme ist,
Mittel, die auf eine Bestimmung, daß die gewünschte Transaktion eine Entnahme ist, ansprechen, zum Bestimmen, ob die Transaktionssumme unter einer zulässigen Obergrenze liegt, und
Mittel zum Gestatten eines Abschließens der gewünschten Transaktion, wenn die Transaktion eine Entnahme ist und die Transaktionssumme unter der zulässigen Obergrenze liegt, oder wenn die Transaktion eine Einlage ist.

6. Transaktionsautomat nach Anspruch 1, bei welchem die Mittel zum Abschließen der Transaktion offline Mittel zum Ausgeben einer gedruckten Aufzeichnung der Offline-Transaktion, welche eine Angabe, daß die Transaktion offline beendet wurde, enthält, aufweisen.

7. Transaktionsautomat nach Anspruch 2, welcher ferner Mittel, die arbeiten, wenn der Automat in Offline-Betriebsweise ist, zum Versuchen, Kommunikationen mit der Zentralstation herzustellen, und, im Falle eines Fehlschlags hinsichtlich der Herstellung der Kommunikationen, zum ferner Einstellen des Automaten offline so, daß er nur Einlagetransaktionen durchführt, aufweist.

## Revendications

1. Machine automatique pour transaction destinée à exécuter les transactions d'un client et à communiquer avec une station centrale, ladite machine comportant:
un moyen destiné à recevoir des données d'identification identifiant un client;
un moyen destiné à recevoir le montant d'une transaction;
un moyen destiné à recevoir des informations concernant une transaction désirée;
un moyen (20) destiné à initialiser une communication de transaction en mode connecté avec ladite station centrale par un lien de communications;
un moyen sensible à l'établissement de ladite communication de transaction en mode connecté avec ladite station centrale, destiné à transmettre des données comportant au moins lesdites données d'identification et le montant de la transaction sur ledit lien de communications à ladite station centrale afin de mettre à jour un fichier de compte correspondant auxdites données d'identification qui s'y trouvent;
un moyen sensible à un premier signal reçu de ladite station centrale indiquant la mise à jour dudit fichier de compte destiné à terminer ladite transaction désirée en mode connecté;
un moyen sensible à l'absence de communication en mode connecté avec ladite station centrale, après qu'une communication en mode connecté ait été initialisée, destiné à terminer ladite transition désirée en mode déconnecté; et
un moyen de mémoire de transaction en mode déconnecté (M2, M3) fonctionnant lorsque ladite machine termine ladite transaction désirée en mode déconnecté, destiné à stocker les données concernant une transaction achevée en mode déconnecté pour une transmission ultérieure à ladite station centrale, caractérisée par
un moyen fonctionnant lors de l'établissement de communications avec ladite station centrale, destiné à demander à ladite station centrale si ledit fichier de compte a été mis à jour par les données de transaction stockées dans ledit moyen de mémoire de transaction en mode déconnecté; et
un moyen sensible à un second signal provenant de ladite station centrale indiquant que ledit fichier de compte n'a pas été mis à jour par la transmission desdites données de transactions depuis ledit moyen de mémoire de transaction en mode déconnecté vers ladite station centrale.

2. Machine automatique pour transaction selon la revendication 1, dans laquelle ledit moyen destiné à terminer ladite transaction désirée en mode déconnecté met ladite machine en mode déconnecté.

3. Machine automatique pour transaction selon la revendication 1, comportant en outre un moyen sensible à la réception d'un troisième signal provenant de ladite station centrale indiquant la mise à jour dudit fichier de compte, après que lesdites données de transaction y aient été transmises, destiné à effacer lesdites données de transaction dudit moyen de mémoire de transaction en mode déconnecté.

4. Machine automatique pour transaction selon la revendication 3, comportant en outre un moyen sensible à la réception de l'un desdits second et troisième signaux indiquant la mise à jour dudit fichier de compte, destiné à placer ladite machine dans un mode connecté.

5. Machine automatique pour transaction selon la revendication 1, dans laquelle ledit moyen destiné à terminer ladite transaction désirée en mode déconnecté comporte en outre:
un moyen destiné à déterminer si une transaction désirée est un dépôt ou un retrait;
un moyen sensible à la détermination du fait que la transaction désirée est un retrait afin de déterminer si le montant de la transaction est inférieur à une limite supérieure permise; et
un moyen destiné à permettre l'achèvement de ladite transaction désirée si ladite transaction est un retrait et si le montant de la transaction est inférieur à ladite limite supérieure permise; ou si ladite transaction est un dépôt.

6. Machine automatique pour transaction selon la revendication 1, dans laquelle ledit moyen destiné à terminer ladite transaction en mode déconnecté comporte un moyen destiné à éditer un enregistrement imprimé de ladite transaction en mode déconnecté qui comporte l'indication que ladite transaction a été effectuée en mode déconnecté.

7. Machine automatique pour transaction selon la revendication 2, comportant en outre un moyen fonctionnant lorsque ladite machine est dans ledit mode déconnecté, destiné à tenter d'établir une communication avec ladite station centrale et, en réponse à un défaut d'établissement desdites communications, à faire fonctionner également ladite machine en mode déconnecté afin de n'exécuter que des transactions de dépôt.
